# EUROPEAN PATENT SPECIFICATION

(11) **EP 3 020 639 B1**
(45) Date of publication and mention of the grant of the patent: **02.01.2019**
(21) Application number: 14193549.4
(22) Date of filing: 17.11.2014
(51) Int. Cl.: B64F 5/00

(54) **Support trolley for supporting a door of an aircraft**
Stützwagen zur Handhabung einer Tür eines Flugzeugs
Chariot de support destiné à supporter une porte d'un avion

(43) Date of publication of application: 18.05.2016
(73) Proprietor: Airbus Operations GmbH, 21129 Hamburg (DE)
(72) Inventor: Noel, Mathieu, 21129 Hamburg (DE)
(74) Representative: Bird & Bird LLP

(56) References cited:
- GB-A- 2 223 460
- GB-A- 2 329 613
- US-A- 4 530 492
- US-A- 5 879 021

## Description

The invention relates to a support trolley for supporting a door of an aircraft to permit working on the door, e.g. painting of the door.

Generally, all work including painting on the door of an aircraft is done at the plant for manufacturing such doors in which plant corresponding assembly racks are provided. However, when the door of an aircraft needs to be removed from the fuselage of the aircraft to repair and/or repaint the door, it is difficult to position the door in the vicinity of the parked aircraft so that all the areas to be worked on become accessible.

GB 2 223 460 A and GB 2 329 613 A each disclose a support trolley comprising a frame with an upper support portion. Support bolts with recesses at their free ends are provided on the support portions.

Thus, it is an object of the invention to provide for a support trolley which can support a door of an aircraft in a way that permits access to essentially all parts of the door.

To solve such problem, the support trolley comprises a frame with an upper support portion having at least two pairs of support bolts having a receiving recess at its free end for engagement with locking bolts of the door to be supported so that the door is supported at each lateral side by a pair of support bolts.

As the support bolts engage with the locking bolts of the door which locking bolts form part of the mechanism for locking the closed door to the fuselage, the door is mounted on the support trolley only by engagement of the support bolts with the locking bolts so that essentially all parts of the door remain accessible for repair, repainting and the like. The support trolley may placed anywhere near the parked aircraft and can be easily moved around.

Preferably, the support bolts are movable between a release position in which the locking bolts can be brought in engagement with the support bolts, and a support position in which the support bolts are fixed to the upper support portion of the support trolley.

By such an arrangement the support bolts can be removed from the support portion and can be brought into engagement with the locking bolts of the door hanging on a crane or the like. Then the door including the support bolts can be moved to a position in which the support bolts can be fixed to the upper support portion of the support trolley.

The receiving recess of the supporting bolts is preferably arranged eccentrically with respect to the longitudinal axis of the support bolt.

By providing an eccentric or laterally offset arrangement of the receiving recess, the support bolt may be rotated when in engagement with the locking bolt to adapt to slight differences in position of the locking bolts on the door dependent on the overall curvature of the door. Such curvatures differ somewhat dependent on the position of the door on the fuselage.

In its support position each support bolt may be held by means of a releasable clamping mechanism which comprises a clamp with a pivotable element and a clamping bolt.

When opening the clamp by pivoting the pivotable element, the support bolt can be inserted and thereafter clamped in its support position by closing the pivotable element and tightening the clamping bolt.

The support bolts may be provided on support beams which are height-adjustably mounted on the upper support portion.

To adapt to different sizes of aircraft doors, the distance between the bolts of both pairs of support bolts may be adjustable.

In a preferred arrangement the upper support portion of the support trolley comprises a sub-frame on which the support bolts are mounted and which in its horizontal position is located in a plane parallel to the support plane formed by the rollers of the trolley, wherein the sub-frame is pivotable out of its horizontal position about an axis which extends in parallel to the axes of said support bolts, wherein the axis is preferably located offset from the middle of the sub-frame by between 15 % and 20 % of the length of the sub-frame.

By pivoting the sub-frame carrying a door, the position of the door can be adapted so that easier access to areas becomes possible which areas are not that easy accessible when the door is in its horizontal position.

The sub-frame may be lockable in its horizontal position and in at least one inclined position.

In the following an embodiment of the invention will be described with respect to the figures.
- Fig. 1: shows a perspective view of a support trolley.
- Fig. 2: shows another perspective view of the support trolley of Fig. 1.
- Fig. 3: shows a view of the support trolley corresponding to Fig. 1 with an aircraft door mounted thereon.
- Fig. 4: shows a perspective view of a support bolt.
- Fig. 5: shows a perspective view of a support beam with a clamping mechanism for a support bolt.

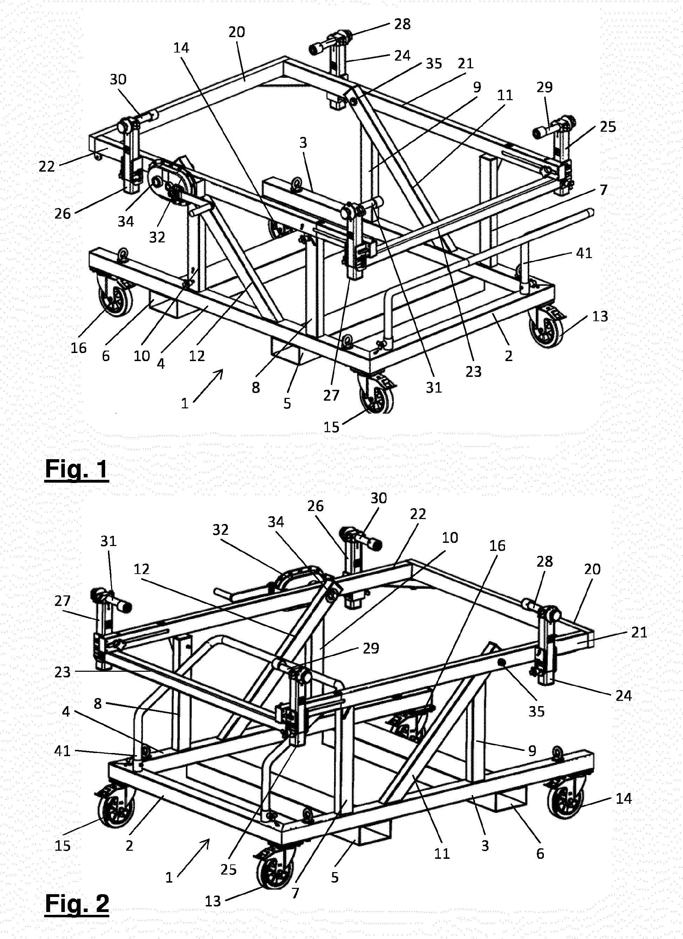

The support trolley 1 shown in Figs. 1 to 3 comprises a frame formed by interconnected beams 2, 3, 4, 5, 6 and upstanding beams 7, 8, 9, 10 as well as inclined beams 11, 12. To this frame rollers 13, 14, 15, 16 are attached which can be releasably locked to prevent movement of the trolley 1. On top of the frame a sub-frame is provided which comprises beams 20, 21, 22, 23 and is connected to the frame by means of a shaft 34 and a bolt 35. In its horizontal position shown in the figures the sub-frame rests on upstanding beams 7, 8 of the frame.

On the beams 21, 22 of the sub-frame pairs of support bolts 28, 29 and 30, 31 are mounted by means of upstanding support beams 24, 25, 26, 27. These support beams 24, 25, 26, 27 are height-adjustable and are held in position by corresponding clamping mechanisms not shown in detail. The distances between the support bolts 28, 29, 30, 31 of each pair of support bolts 28, 29, 30, 31 can be adjusted by displacing the support beam 25 and the support beam 27 along slots in beams 21, 22. In the adjusted position the support beams 25, 27 can be clamped to the beams 21, 22.

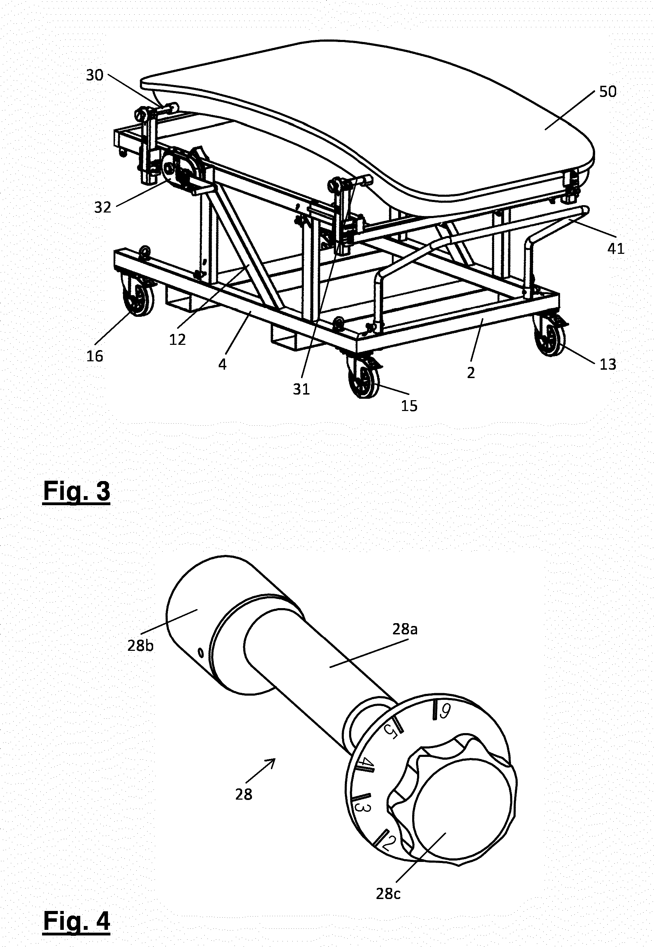

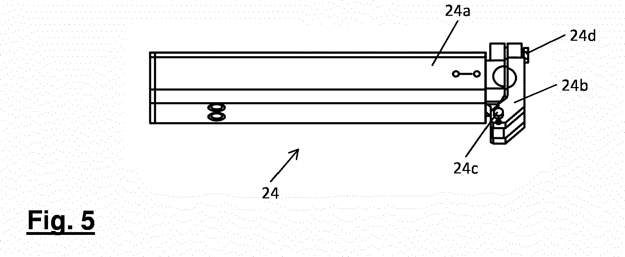

As indicated in Fig. 5, the support beams (here support beam 24) comprise a clamping mechanism at the upper ends of their beam body 24a. The clamping mechanism comprises a pivotable clamping element 24b pivotable about an axis 24c so that in the closed state an essentially circular opening is provided, whereas in the open state the shaft body 28a of a support bolt 28 (Fig. 4) can be inserted. As indicated in Figs. 1 and 2, recesses are provided in the free ends of the support bolts 28, 29, 30, 31 for receiving locking bolts of an aircraft door, wherein, as shown in Fig. 4, the portion of the support bolt 28b comprising the recess is arranged eccentrically or laterally offset with respect to the longitudinal axis of the shaft portion 28a. Thereby, when the support bolt 28 is inserted in the clamping mechanism of the support beam 24 and the clamping element 24b is not yet tightly clamped in engagement with the shaft portion 28a by means of a clamping bolt 24d, the support bolt 28 can be rotated by manual engagement of the knob 28c and thereby the recess can be moved to a position to compensate for slight misalignments with respect to the corresponding locking bolt of the aircraft door to be supported.

To mount an aircraft door 50 on the support trolley 1 shown, as indicated in Fig. 3, the support bolts 28, 29, 30, 31 are removed from their clamping mechanisms and are pushed onto locking bolts (not shown) of the aircraft door which is held by a crane or the like. Then the door 50 together with the support bolts 28, 29, 30, 31 is moved to a position in which the support bolts 28, 29, 30, 31 engage with the upper ends of the support beams 24, 25, 26, 27 which have their clamping elements 24b moved to an open position. After possibly adjusting one or more of the support bolts 28, 29, 30, 31 to compensate for slight differences in adjustment, the clamping elements are moved to their closed positions and clamping is effected by tightening the corresponding clamping bolts 24d. Thus, the aircraft door 50 is held in position, as indicated in Fig. 3 in which position e.g. the outer surface of the door 50 may be repainted.

To move the sub-frame 24, 25, 26, 27 together with the door 50 supported to an inclined position, the crank handle of the crank mechanism 32 can be rotated which results in a rotation of the sub-frame 20, 21, 22, 23 about the axis of shaft 34 and bolt 35 arranged coaxially with respect to shaft 34. In both the horizontal position and in at least one inclined position the sub-frame 20, 21, 22, 23 can be locked with respect to the frame 2, 3, 4, 5, 6 by means not shown in the drawings.

As shown in Figs. 1 to 3 a handle 41 can be releasably attached to the frame 2, 3, 4, 5, 6 to facilitate movement of the support trolley 1.

## Claims

1. Support trolley (1) for supporting a door (50) of an aircraft to permit working on the door (50), e.g. painting of the door (50), the trolley comprising a frame (2, 3, 4, 5, 6) with an upper support portion comprising at least two pairs of support bolts (28, 29, 30, 31) with receiving recesses at their free ends for engagement with locking bolts of the door (50) to be supported so that the door (50) is supported at each lateral side by a pair of support bolts (28, 29, 30, 31), the receiving recess being arranged eccentrically with respect to the longitudinal axis of the support bolt (28, 29, 30, 31) such that the support bolt (28, 29, 30, 31) may be rotated when in engagement with the locking bolts of the door (50) to adapt to slight differences in position of the locking bolts on the door (50).

2. Support trolley (1) according to claim 1, **characterized in that** in a support position the support bolt (28) is held by means of a releasable clamping mechanism which comprises a clamp with a pivotable element (24b) and a clamping bolt (24d), wherein the support bolts (28, 29, 30, 31) are fixed to said upper support portion in the support position.

3. Support trolley (1) according to one of claims 1 or 2, **characterized in that** the support bolts (28, 29, 30, 31) are provided on support beams (24, 25, 26, 27) height-adjustably mounted on said upper support portion.

4. Support trolley (1) according one of claims 1 to 3, **characterized in that** the distance between the support bolts (28, 29, 30, 31) of both pairs of support bolts (28, 29, 30, 31) is adjustable.

5. Support trolley (1) according to one of claims 1 to 4, **characterized in that** said upper support portion comprises a sub-frame (20, 21, 22, 23) on which the support bolts (28, 29, 30, 31) are mounted and which in its horizontal position is located in a plane parallel to the support plane formed by the rollers (13, 14, 15, 16) of the trolley (1), and that the sub-frame (20, 21, 22, 23) is pivotable out of its horizontal position about an axis (34, 35) which extends in parallel to the axes of said support bolts (28, 29, 30, 31).

6. Support trolley (1) according to claim 5, **characterized in that** said axis (34, 35) is located offset from the middle of the sub-frame (20, 21, 22, 23) by between 15 % and 20 % of the length of the sub-frame (20, 21, 22, 23).

7. Support trolley (1) according to claim 5 or 6, **characterized in that** said sub-frame (20, 21, 22, 23) can be locked in its horizontal position and in at least one inclined position.

## Patentansprüche

1. Stützwagen (1) zum Stützen einer Tür (50) eines Flugzeugs, um Arbeiten an der Tür (50), z. B. ein Lackieren der Tür (50) zu gestatten, wobei der Wagen Folgendes umfasst:
einen Rahmen (2, 3, 4, 5, 6) mit einem oberen Stützabschnitt, der mindestens zwei Paare von Stützbolzen (28, 29, 30, 31) mit aufnehmenden Vertiefungen an ihren freien Enden für ein Eingreifen mit Sicherungsbolzen der zu stützender Tür (50) umfasst, sodass die Tür (50) auf jeder lateralen Seite durch ein Paar von Stützbolzen (28, 29, 30, 31) gestützt wird, wobei die aufnehmende Vertiefung in Bezug auf die Längsachse des Stützbolzens (28, 29, 30, 31) exzentrisch angeordnet ist, sodass der Stützbolzen (28, 29, 30, 31), wenn er sich im Eingriff mit den Sicherungsbolzen der Tür (50) befindet, zur Anpassung an leichte Unterschiede in der Position der Sicherungsbolzen an der Tür (50) gedreht werden kann.

2. Stützwagen (1) nach Anspruch 1, **dadurch gekennzeichnet, dass** der Stützbolzen (28) in einer Stützposition mittels eines lösbaren Klemmmechanismus gehalten wird, der eine Klemme mit einem schwenkbaren Element (24b) und einen Klemmbolzen (24d) umfasst, wobei die Stützbolzen (28, 29, 30, 31) an dem oberen Stützabschnitt in der Stützposition befestigt sind.

3. Stützwagen (1) nach einem der Ansprüche 1 oder 2, **dadurch gekennzeichnet, dass** die Stützbolzen (28, 29, 30, 31) auf Stützträgern (24, 25, 26, 27) bereitgestellt sind, die höhenverstellbar an dem oberen Stützabschnitt montiert sind.

4. Stützwagen (1) nach einem der Ansprüche 1 bis 3, **dadurch gekennzeichnet, dass** der Abstand zwischen den Stützbolzen (28, 29, 30, 31) beider Paare von Stützbolzen (28, 29, 30, 31) einstellbar ist.

5. Stützwagen (1) nach einem der Ansprüche 1 bis 4, **dadurch gekennzeichnet, dass** der obere Stützabschnitt einen Teilrahmen (20, 21, 22, 23) umfasst, an dem die Stützbolzen (28, 29, 30, 31) montiert sind und der in seiner horizontalen Position in einer Ebene parallel zu der Stützebene befindlich ist, die durch die Rollen (13, 14, 15, 16) des Wagens (1) gebildet werden, und dass der Teilrahmen (20, 21, 22, 23) aus seiner horizontalen Position um eine Achse (34, 35) die sich parallel zu den Achsen der Stützbolzen (28, 29, 30, 31) erstreckt, herausschwenkbar ist.

6. Stützwagen (1) nach Anspruch 5, **dadurch gekennzeichnet, dass** die Achse (34, 35) um zwischen 15 % und 20 % der Länge des Teilrahmens (20, 21, 22, 23) von der Mitte des Teilrahmens (20, 21, 22, 23) versetzt positioniert ist.

7. Stützwagen (1) nach Anspruch 5 oder 6, **dadurch gekennzeichnet, dass** der Teilrahmen (20, 21, 22, 23) in seiner horizontalen Position und in mindestens einer geneigten Position gesperrt werden kann.

## Revendications

1. Chariot de support (1) pour supporter une porte (50) d'un aéronef pour permettre de travailler sur la porte (50), par exemple de peindre la porte (50), le chariot comprenant un cadre (2, 3, 4, 5, 6) avec une portion de support supérieure comprenant au moins deux paires de boulons de support (28, 29, 30, 31) avec des renfoncements de réception au niveau de leurs extrémités libres, destinés à venir en prise avec des boulons de verrouillage de la porte (50) devant être supportée de telle sorte que la porte (50) soit supportée au niveau de chaque côté latéral par une paire de boulons de support (28, 29, 30, 31),
le renfoncement de réception étant disposé de manière excentrique par rapport à l'axe longitudinal du boulon de support (28, 29, 30, 31) de telle sorte que le boulon de support (28, 29, 30, 31) puisse être tourné lorsqu'il est en prise avec les boulons de verrouillage de la porte (50) de manière à s'adapter à de légères différences de position des boulons de verrouillage sur la porte (50) .

2. Chariot de support (1) selon la revendication 1, **caractérisé en ce que**, dans une position de support, le boulon de support (28) est retenu au moyen d'un mécanisme de serrage amovible qui comprend une pince avec un élément pivotant (24b) et un boulon de serrage (24d), les boulons de support (28, 29, 30, 31) étant fixés à ladite portion de support supérieure dans la position de support.

3. Chariot de support (1) selon l'une des revendications 1 ou 2, **caractérisé en ce que** les boulons de support (28, 29, 30, 31) sont prévus sur des poutres de support (24, 25, 26, 27) montées de manière ajustable en hauteur sur ladite portion de support supérieure.

4. Chariot de support (1) selon l'une des revendications 1 à 3, **caractérisé en ce que** la distance entre les boulons de support (28, 29, 30, 31) des deux paires de boulons de support (28, 29, 30, 31) est ajustable.

5. Chariot de support (1) selon l'une des revendications 1 à 4, **caractérisé en ce que** ladite portion de support supérieure comprend un sous-cadre (20, 21, 22, 23) sur lequel les boulons de support (28, 29, 30, 31) sont montés et qui, dans sa position horizontale, est situé dans un plan parallèle au plan de support formé par les rouleaux (13, 14, 15, 16) du chariot (1), et **en ce que** le sous-cadre (20, 21, 22, 23) peut pivoter hors de sa position horizontale autour d'un axe (34, 35) qui s'étend parallèlement aux axes desdits boulons de support (28, 29, 30, 31).

6. Chariot de support (1) selon la revendication 5, **caractérisé en ce que** ledit axe (34, 35) est situé de manière décalée par rapport au milieu du sous-cadre (20, 21, 22, 23) d'environ 15 % à 20 % de la longueur du sous-cadre (20, 21, 22, 23).

7. Chariot de support (1) selon la revendication 5 ou 6, **caractérisé en ce que** ledit sous-cadre (20, 21, 22, 23) peut être verrouillé dans sa position horizontale et dans au moins une position inclinée.
